# EUROPEAN PATENT SPECIFICATION

(11) **EP 2 789 848 B1**
(45) Date of publication and mention of the grant of the patent: **28.09.2016**
(21) Application number: 12855550.5
(22) Date of filing: 10.08.2012
(51) Int. Cl.: F03D 13/25

(54) **FLOATING TYPE WIND TURBINE GENERATION APPARATUS AND MOORING METHOD THEREOF**
SCHWIMMENDE WINDKRAFTANLAGE UND VERFAHREN ZUM VERTÄUEN DAFÜR
DISPOSITIF GÉNÉRATEUR D'ÉNERGIE ÉOLIENNE DU TYPE FLOTTANT ET PROCÉDÉ DE MOUILLAGE ASSOCIÉ

(30) Priority: 05.12.2011 JP 2011265666; 05.12.2011 JP 2011265667
(43) Date of publication of application: 15.10.2014
(73) Proprietor: Mitsubishi Heavy Industries, Ltd., Tokyo 108-8215 (JP)
(72) Inventor: KOMATSU, Masao, Tokyo 108-8215 (JP)
(74) Representative: Intès, Didier Gérard André
(86) International application number: PCT/JP2012/070493
(87) International publication number: WO 2013/084545

(56) References cited:
- WO-A2-2011/137903
- JP-A- S57 107 991
- JP-A- S61 139 588
- JP-A- 2000 501 671
- JP-A- 2004 019 470
- JP-A- 2008 013 101
- JP-A- 2011 521 820

## Description

### TECHNICAL FIELD

This disclosure relates to a floating type wind turbine generating apparatus which includes a floating body floating on the water surface and a wind turbine generator and which is moored on the ocean and the like by mooring cables, and a mooring method of the floating type wind turbine generating apparatus.

### BACKGROUND

In the case where a wind turbine generating apparatus is to be installed on the ocean and the like, a bottom-mounted type wind turbine generating apparatus is generally employed in such region where the water is shallow. A bottom-mounted type wind turbine generating apparatus includes a base disposed on the bottom of the water, and a wind turbine generator disposed on the base. However, in such a region where the water is deep, the bottom-mounted type wind turbine generating apparatus is uneconomic. Therefore, a floating type wind turbine generating apparatus would be employed.

The floating type wind turbine generating apparatus includes a floating body floating on the water surface and a wind turbine generator installed on the floating body. For instance, as described in Patent Documents 1 and 2, the floating body on which the wind turbine generator is installed is moored on the ocean and the like by connecting the floating body and the anchors disposed on the bottom of the water.

### Citation List

### Patent Literature

Patent Document 1: JP2011-521820A
Patent Document 2: JP2001-165032

WO 2011/137903 discloses another example of a floating system on which multiple wind turbines are installed.

### SUMMARY

### Technical Problem

Upon mooring the floating body on the ocean and the like, it is necessary to stably moor the floating body against the drift force and rotational moment, which act on the floating body due to the influence by wind load acting on the wind turbine generator, waves and tidal current acting on the floating body, and the like. In order to stably moor the floating body against the drift force and rotational moment, it is necessary to consider the relationship to the surrounding environment such as the tidal current and wind direction in addition to the structure and arrangement of the mooring cables. However, this point is not sufficiently taken into account in the above described prior art.

At least one embodiment of the present invention was made in view of the above problem, and to provide a floating type wind turbine generating apparatus capable of stably mooring the floating body against the drift force and rotational moment acting on the floating body, and a mooring method of the floating type wind turbine generating apparatus.

### Solution to Problem

In order to achieve the above described object, in at least one embodiment of the present invention, a floating type wind turbine generating apparatus according to claim 1 comprises:
a wind turbine generator;
a floating body including a first column which is disposed on an upwind side in a main wind direction and on which the wind turbine generator is disposed, a second column and a third column disposed on a downwind side with respect to the first column in the main wind direction, and two lower hulls one of which connecting the first and second columns and other of which connecting the first and third columns;
a plurality of mooring cables each of which connecting the floating body and an anchor fixed on a water bottom in a catenary curve,
wherein at least two of the mooring cables are connected to the first column, at least one of the mooring cables is connected to the second column, and at least one of the mooring cables is connected to the third column, and
wherein the mooring cables extend radially from the floating body so as not to intersect with one another in a planar view.

In the floating type wind turbine generating apparatus with the above configuration, at least two mooring cables are connected to the first column disposed on the upwind side in the main wind direction, while at least one mooring cable is connected to each of the second column and the third column disposed on the downwind side in the main wind direction. Thus, the at least two mooring cables connected to the first column resist the drift force in the main wind direction acting on the floating body, while the at least one mooring cable connected to each of the second column and the third column resists the drift force in other directions acting on the floating body and the rotational moment around the first column. As a result, it is possible to moor the floating body stably against the drift force and rotational moment acting on the floating body.

Hereinafter, in this description, "the main direction" means the main wind direction at the relevant location. Although the wind direction varies in accordance with the season or the weather, also varying in the same day between morning and night, there is a particular wind direction, which can be called a main wind direction as observed throughout a year, in such a place where the wind turbine generating apparatus could be installed. This particular direction is referred to as "main wind direction" in this description.

In the floating type wind turbine generating apparatus according to the present invention,
the at least one mooring cable connected to the second column includes a rotation preventing mooring cable extending toward a region on a first column side, the region defined by a bisector at an intersection of the two lower hulls and by a straight line which is orthogonal to the bisector and which passes through a center of the second column, and
the at least one mooring cable connected to the third column includes a rotation preventing mooring cable extending toward a region on the first column side, the region defined by a bisector at an intersection of the two lower hulls and by a straight line which is orthogonal to the bisector and which passes through a center of the third column.

With the at least one mooring cables connected to the second column and the third column including the rotation preventing mooring cable extending toward the above described region, it is possible to moor the floating body in the stable state against the rotational moment around the first column.

Also in the floating type wind turbine generating apparatus according to one embodiment of the present invention,
the rotation preventing mooring cable connected to the second column extends in a direction orthogonal to an axial direction of the first lower hull connecting the first and second columns, and
the rotation preventing mooring cable connected to the third column extends in a direction orthogonal to an axial direction of the second lower hull connecting the first and third columns.

With the rotation preventing mooring cables connected to the second column and the third column extending in the respective directions orthogonal to the axial directions of the first lower hull and the second lower hull, it is possible to moor the floating body in the even more stable state against the rotational moment around the first column.

Also, in the floating type wind turbine generating apparatus according to one embodiment of the present invention, a plurality of the mooring cables is connected to each of the second and third columns.

With a plurality of the mooring cables connected to each of the second and third columns, it is possible to moor the floating body more stably against the drift force and rotational moment acting on the floating body. Also, the floating body does not become unstable against the drift force and rotational moment immediately even when one of the mooring cables is cut off, thereby reducing the risk arising from such cut-off.

Also in the floating type wind turbine generating apparatus according to one embodiment of the present invention, each of the first, second and third columns has a guide part disposed on a side face thereof, the guide part being configured to guide the mooring cable to be connected in a vertical direction along the side face of each of the columns.

The mooring cables connecting the floating body and the anchors in the catenary curve are connected slantwise to the side face of the columns. With the above guide parts disposed on each of the columns, it is possible to guide the mooring cables along the side face of the columns.

Also, in the floating type wind turbine generating apparatus according to one embodiment of the present invention,
each of the first, second, and third columns has a stopper disposed above the guide part on the side face thereof, the stopper being configured to prevent the mooring cable guided by the guide part from falling downward, and
the stopper includes: a protruding member protruding from the side face of each of the columns and having a through-hole into which the mooring cable is insertable and whose opening increases upward in size; and a wedge member insertable into the through-hole from above in a state where the mooring cable is inserted through the through-hole.

With the above described stopper disposed on the side face of the column, it is possible to prevent the mooring cable from falling down with a simple configuration where the wedge member is inserted into the through-hole formed on the protruding member.

Also, in the floating type wind turbine generating apparatus according to one embodiment of the present invention, the guide part comprises a fairlead arranged so that the mooring cable is held between the fairlead and the side face of the column.

By using a fairlead as the above described guide part, it is possible to smoothly guide the mooring cable along the side face of the column in the vertical direction, the mooring cable extending slantwise toward the side face of the column from the anchor in the catenary curve.

Further, in the floating type wind turbine generating apparatus according to one embodiment of the present invention,
the mooring cable has a chain shape of a plurality of linked ring members, and
the fairlead includes:
a pair of supporting members protruding from the side face of each of the columns; and
a rotating body which is rotatably supported between the pair of the supporting members and which has a plurality of projections with a pitch corresponding to a length of each of the ring members, the projections being disposed on an outer circumference of the rotating body along a rotational direction, and
wherein each of the projections has a slit into which at least one of the ring members is insertable, thereby guiding the mooring cable in the vertical direction along the side face of each of the columns.

With the fairlead of the above configuration, the ring member is inserted into the slit of the projection formed on the outer circumference of the rotational body. As a result, it is possible to guide the mooring cables securely without causing misalignment of the mooring cable.

Further, in the floating type wind turbine generating apparatus according to one embodiment of the present invention, a pressing member is disposed on a top face of each of the first, second, and third columns, the pressing member being configured to force the mooring cable against the top face so as to fix the mooring cable on to the top face.

With the above pressing member, it is possible to fix the mooring cable guided by the guide part along the side face of the column by forcing the mooring cable against the top face of the column.

Further, in the floating type wind turbine generating apparatus according to one embodiment of the present invention, the floating body has a housing space inside each of the first, second, and third columns, the housing space having an opening on the top face of said each of the columns and being configured to house the mooring cable.

With the above housing space disposed inside the column, it is possible to house the extra part at the end of the mooring cable fixed by the pressing part.

Further, in the floating type wind turbine generating apparatus according to one embodiment of the present invention, the floating body includes a water storage inside the floating body, the water storage space being configured capable of adjusting a stored amount of a ballast water.

With the above water storage space disposed inside the floating body, it is possible to change the degree of sinking of the floating body by adjusting the amount of the ballast water of the water storage space. As a result, it is possible to appropriately adjust the degree of sinking of the floating body suitably so as to stabilize the floating body against the drift force and rotational moment in accordance with the surrounding environments of the place where the floating type wind turbine generating apparatus is moored.

Further, in the floating type wind turbine generating apparatus according to one embodiment of the present invention, the water storage space provided inside the floating body is divided into a plurality of auxiliary rooms in a longitudinal direction of each of the lower hulls, each of the auxiliary rooms being configured capable of taking in and discharging the ballast water.

With the above configuration, it is possible to appropriately adjust the stored volume of the ballast water for each of the auxiliary rooms formed by dividing the lower hull in the longitudinal direction, and thus to control the gravity position of the floating body.

Further, in the floating type wind turbine generating apparatus according to one embodiment of the present invention, a rope is connected to an end of the mooring cable on a side connected to the column.

With the rope connected to the end of the mooring cable, it becomes easier to handle the mooring cable in the case where the mooring cable is disposed along the side face of the column via the guide part.

Further, in one embodiment of the present invention, a mooring method for a floating type wind turbine generating apparatus comprising a wind turbine generator, a floating body on which the wind turbine generator is installed including a first column connected to second and third columns via two lower hulls, and a plurality of mooring cables each of which is connecting the floating body and an anchor fixed on a water bottom, the method according to claim 13 comprising the steps of:
arranging the floating body so that the first column is positioned at an upwind side in a main wind direction and the second and third columns are positioned at a downwind side with respect to the first column in the main wind direction;
connecting at least two of the plurality of the mooring cables to the first column in a catenary curve;
connecting at least one of the plurality of the mooring cables to the second column in the catenary curve;
connecting at least one of the plurality of the mooring cables to the third column in the catenary curve; and
arranging the mooring cables radially so as not to intersect with one another.

In the above mooring method of the floating type wind turbine generating apparatus, the floating body is arranged so that the first column is positioned at an upwind side in a main wind direction and the second and third columns are positioned at a downwind side with respect to the first column in the main wind direction. Also, at least two mooring cables are connected to the first column disposed, while at least one mooring cables is connected to each of the second column and the third column. The floating type wind turbine generating apparatus moored by the above method resists the drift force acting on the floating body with the at least two mooring cables connected to the first column, and resists the rotational moment acting on the floating body with the at least one mooring cable connected to each of the second column and the third column. As a result, the floating body is moored stably against the drift force and rotational moment acting on the floating body.

Further, in the mooring method of the floating type wind turbine generating apparatus according to the present invention, the at least one mooring cable connected to the second column includes a rotation preventing mooring cable connected so as to extend toward a region on the first column side, the region defined by a bisector at an intersection of the two lower hulls and by a straight line which is orthogonal to the bisector and which passes through a center of the second column, and the at least one mooring cable connected to the third column includes a rotation preventing mooring cable extending toward a region on the first column side, the region defined by a bisector at an intersection of the two lower hulls and by a straight line which is orthogonal to the bisector and which passes through a center of the third column.

With the at least one mooring cables connected to the second column and the third column including the rotation preventing mooring cable extending toward the above described region, it is possible to moor the floating body in the stable state against the rotational moment around the first column.

Further, in the mooring method of the floating type wind turbine generating apparatus according to one embodiment of the present invention, the rotation preventing mooring cable connected to the second column is connected so as to extend in a direction orthogonal to an axial direction of the first lower hull connecting the first and second columns, and the rotation preventing mooring cable connected to the third column is connected so as to extend in a direction orthogonal to an axial direction of the second lower hull connecting the first and third columns.

By connecting the rotation preventing mooring cables connected to the second column and the third column so as to extend in the respective directions orthogonal to the axial directions of the first lower hull and the second lower hull, it is possible to moor the floating body in the even more stable state against the rotational moment around the first column.

Further, in the mooring method of the floating type wind turbine generating apparatus according to one embodiment of the present invention, a plurality of the mooring cables is connected to each of the second and third columns.

With a plurality of the mooring cables connected to each of the second and third columns, the floating body does not become unstable against the drift force and rotational moment immediately even when one of the mooring cables is cut off, thereby reducing the risk arising from cut-off.

Further, the mooring method of the floating type wind turbine generating apparatus according to one embodiment of the present invention includes, before connecting the mooring cables to the floating body, the steps of: sinking each of the anchors connected to each of the mooring cables to a predetermined position at the bottom of the water by a ship independent of the floating body; and towing each of the mooring cables so as to fix each of the sunken anchors on the bottom of the water.

The anchor connected to the mooring cable is sunk to the predetermined position on the bottom of the water by a ship other than the floating body before connecting the mooring cable to the floating body and then the mooring cable is towed to fix the sunken anchor on the bottom of the water. Accordingly, it is possible to fix the anchor on the bottom of the water and connect the floating body and the anchor using the mooring cable without providing a crane for the floating body itself. As a result, it is possible to enhance efficiency of the mooring process and reduce the cost of the mooring process.

Further, in the mooring method of the floating type wind turbine generating apparatus according to one embodiment of the present invention, in the towing step, the mooring cables are coupled with one another and the coupled mooring cables are collectively towed, thereby fixing the sunken anchors collectively on the bottom of the water.

By fixing a plurality of the sunken anchors collectively on the bottom of the water, it is possible to reduce the number of the towing operations, thereby improving efficiency of the mooring process and reducing the cost.

Further, in the mooring method of the floating type wind turbine generating apparatus according to one embodiment of the present invention, in the towing step, a holding power of each of the mooring cables is measured based on an output torque of a power supply for towing the mooring cables or a tension of each of the mooring cables being towed.

With the above method, it is possible to easily measure the holding power of the mooring cables. As a result, it is possible to easily confirm whether the anchors are appropriately fixed on the bottom of the water.

### Advantageous Effects

According to at least one embodiment of the present invention, it is possible to provide a floating type wind turbine generating apparatus capable of stably mooring the floating body against the drift force and rotational moment acting on the floating body, and a mooring method of the floating type wind turbine generating apparatus.

### BRIEF DESCRIPTION OF DRAWINGS

FIG. 1 is an oblique view of the floating type wind turbine generating apparatus according to one embodiment of the present invention in the state where the floating body is moored on the ocean.
FIG. 2 is a side view of the floating type wind turbine generating apparatus of FIG. 1 as seen from aside.
FIG. 3 is a planar view of the arrangement of the mooring cables of the floating type wind turbine generating apparatus according to one embodiment of the present invention.
FIG. 4 is a planar view of the floating type wind turbine generating apparatus according to one embodiment of the present invention.
FIG. 5 is a cross-sectional view taken along line A-A of FIG. 4 as seen from aside.
FIG. 6 is a cross-sectional enlarged view of the part "a" of FIG. 5.
FIG. 7 is a cross-sectional view of the communication path according to one embodiment of the present invention.
FIG. 8 is an oblique view of the pair of protrusions according to one embodiment of the present invention.
FIG. 9 is a planar view of the arrangement of the breakwater wall according to one embodiment of the present invention.
FIG. 10 is a cross-sectional view of the storage room according to one embodiment of the present invention.
FIG. 11A is a side view, FIG. 11B is a front view, and FIG. 11C is a top view of the guide part according to one embodiment of the present invention.
FIG. 12A is a cross-sectional view of the stopper according to one embodiment of the present invention.
FIG. 12B is an oblique view of one embodiment of the wedge member.
FIG. 13 is a cross-sectional view of a part of the top face of the column according to one embodiment of the present invention.
FIG. 14 is an illustration of the state where the floating type wind turbine generating apparatus is being towed.
FIGs. 15A is an illustration of the step of fixing the anchor to the predetermined position on the bottom of the water, and FIG. 15B is an illustration of the step of connecting the mooring cable and the floating body.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

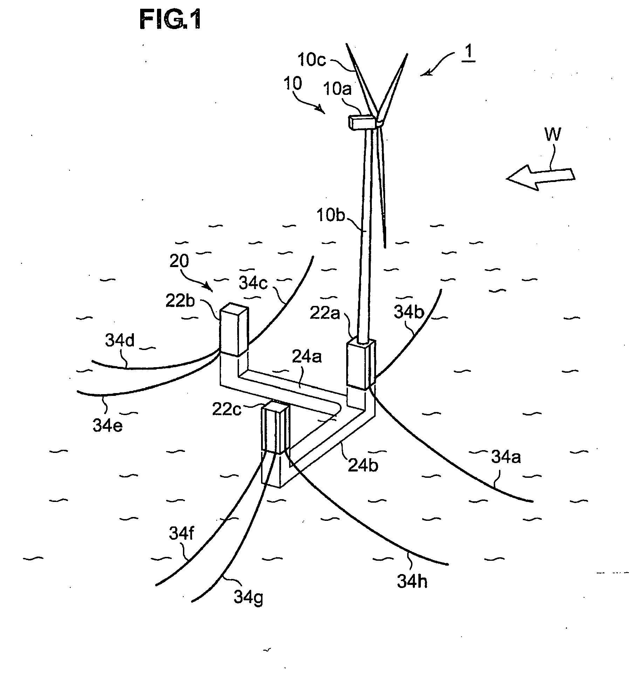

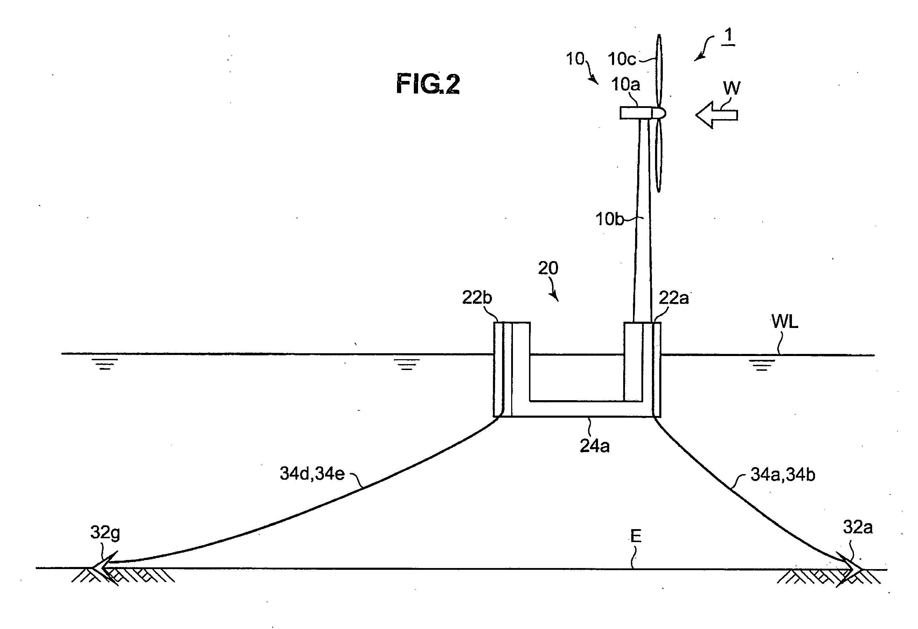

FIG. 1 is an oblique view of the floating type wind turbine generating apparatus according to one embodiment of the present invention in the state where the floating body is moored on the ocean. FIG. 2 is a side view of the floating type wind turbine generating apparatus of FIG. 1 as seen from aside.

As show in FIGs. 1 and 2, the floating type wind turbine generating apparatus 1 according to the present invention includes a floating body 20 floating on the water surface and a wind turbine generator 10 disposed on the floating body 20.

As shown in FIGs. 1 and 2, the wind turbine generator 10 includes a nacelle 10a, a tower 10b disposed standing upright on the top face of the first column 22a, and a blade 10c rotatably mounted to the nacelle 10a. The nacelle 10a is supported by the tower 10b so as to be rotatable around the axial direction of the tower 10b. The nacelle 10a orients the blade 10c to the upwind side in accordance with the wind direction. By the blade 10c rotating upon receiving wind, power generation is performed by the generator not shown in the drawings.

As shown in FIG. 1, the floating body 20 includes three columns 22 (22a, 22b, 22c) having a quadratic prism shape and disposed on the vertex positions of the virtual triangle in the planar view. Also, the floating body 20 includes the first lower hull 24a of an elongated shape connecting the first column 22a and the second column 22b, and the second lower hull 24b of an elongated shape connecting the first column 22a and the third column 22c. Accordingly, the floating body 20 is formed into a substantially V-shape in the planar view by the three columns 22 and two lower hulls 24. The above described wind turbine generator 10 is disposed on the top face of the first column 22a positioned in the middle of the substantially V-shape in the planar view.

In one embodiment of the present embodiment, the first lower hull 24a and the second lower hull 24b are mutually orthogonal. The above described three columns 22 are disposed on the vertex positions of the virtual isosceles right triangle which is symmetric about the bisector of the intersecting angle between the first lower hull 24a and the second lower hull 24b.

Further in one embodiment of the present embodiment, although not specifically shown in the drawings, the third lower hull may be further provided connecting the second column 22b and the third column 22c. Also, the first lower hull 24a and the second lower hull 24b may be connected to each other by a reinforcing beam member.

Further, as described below, the floating body 20 includes a water storage space inside, which stores the ballast water. By injecting the ballast water into the water storage space, the floating body 20 is moored on the water surface in the state where the water line WL is positioned above the top faces of the lower hulls 24.

Further, as shown in FIGs. 1 and 2, the floating body 20 is arranged so that the first column 22a is positioned on the upwind side in the main wind direction W. The wind turbine generator 10 is installed on the top face of the first column 22a. On the other hand, the second column 22b and the third column 22c are arranged to be positioned on the downwind side with respect to the first column 22a in the main wind direction W. It is possible to increase stability of the wind turbine generator 10, which may lean to the back side upon receiving wind load, by arranging the first column 22a on which the wind turbine generator 10 is installed on the upwind side in the main wind direction W.

Further, as shown in FIG. 2, a plurality of mooring cables 34 is connected to the floating body 20 in a catenary curve so as to show catenary curves. The mooring cables 34 are connected to the anchors 32 fixed on the bottom E of the water. The floating body 20 is moored on the ocean by the anchors 32 and the mooring cables 34, resisting the drift force and rotational moment acting on the floating body 20.

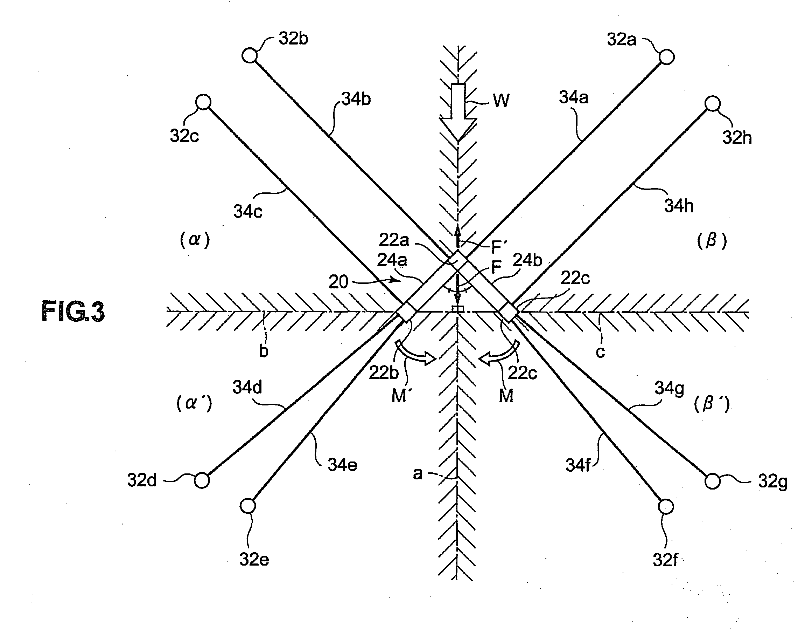

FIG. 3 is a planar view of the arrangement of the mooring cables of the floating type wind turbine generating apparatus according to one embodiment of the present invention.

As shown in FIG. 3, in one embodiment of the present invention, two mooring cables 34a, 34b are connected to the first column 22a. The two mooring cables 34a, 34b extend respectively in the directions along the axial directions of the first lower hull 24a and the second lower hull 24b. Also, three mooring cables 34c, 34d, 34e and three mooring cables 34f, 34g, 34h are respectively connected to the second column 22b and the third column 22c. In this manner, the floating body 20 as a whole includes 8 mooring cables 34a to 34h in total connected thereto. Each of the 8 mooring cables 34 is arranged to radially extend from the floating body 20 so as not to intersect with one another in the planar view.

In one embodiment of the present invention, at least two mooring cables 34 are connected to the first column 22a disposed on the upwind side in the main wind direction W, while at least one mooring cable 34 is connected to each of the second column 22b and third column 22c disposed on the downwind side in the main direction W. With this configuration, the at least two mooring cables 34 connected to the first column 22a resist the drift force F in the main wind direction W acting on the floating body 20, while the at least one mooring cable 34 connected to each of the second column 22b and the third column 22c resists the drift force F' in the other directions and the rotational moment M, M' around the first column 22a acting on the floating body 20. As a result, the floating body 20 is stably moored against the drift force F, F' and rotational moment M, M' acting on the floating body 20.

Further, in one embodiment of the present invention, as shown in FIG. 3, the at least one mooring cable 34 connected to the second column 22b includes the mooring cable 34c (rotation preventing mooring cable) which extends toward the region α on the first column 22a side. The region α is defined by the bisector "a" of the intersection of the first lower hull 24a and the second lower hull 24b, and the straight line "b", which is orthogonal to the bisector "a" and passes through the center of the second column 22b. Similarly, the at least one mooring cable 34 connected to the third column 22c includes the mooring cable 34h (rotation preventing mooring cable) which extends toward the region β on the first column 22a side. The region β is defined by the bisector "a" and the straight line "c", which is orthogonal to the bisector "a" and passes through the center of the third column 22c. In this manner, the mooring cables 34 (rotation preventing mooring cable) connected to the second column 22b and the third column 22c extend in the direction such that the mooring cables 34 effectively resist the rotational moment M, M' around the first column 22a. As a result, the floating body 20 is stably moored.

At this time, by the mooring cables 34 (rotation preventing mooring cable) that extend toward the above described region α and region β also extending in the direction orthogonal to the axial direction of the lower hull 24a and the lower hull 24b, similarly to the mooring cable 34c and the mooring cable 34h shown in FIG. 3, the floating body 20 would be even more stably moored because in this manner the mooring cables 34 extend in the direction 180 degrees opposite to the tangent line of the rotational force when the floating body 20 is about to rotate around the first column 22, which makes it possible for the mooring cables 34 to resist the rotational moment M, M' more effectively.

Also at this time, by a plurality of the mooring cables 34 being connected to each of the second column 22b and the third column 22c as shown in FIG. 3, it is possible to moor the floating body 20 even more stably against the drift force F, F' or the rotational moment M, M' acting on the floating body 20, as well as to prevent the floating body 20 from immediately becoming unstable due to the drift force F, F' or the rotational moment M, M' even when one of the mooring cables 34 is cut off.

Also at this time, when a plurality of the mooring cables 34 are connected to each of the second column 22b and the third column 22c as described above, the mooring cables 34 (34d, 34e, 34f, 34g) may be connected along the axial directions of the lower hulls 24, extending toward the region α' and region β' on the opposite side of the first column 22a beside the mooring cables 34 (34c, 34h) extending in the direction orthogonal to the axial directions of the lower hulls 24. By connecting such mooring cables 34 (34d, 34e, 34f, 34g) to the second column 22b and the third column 22c, the floating body 20 would be stably moored particularly against the drift force F' in the direction opposite to the main wind direction W.

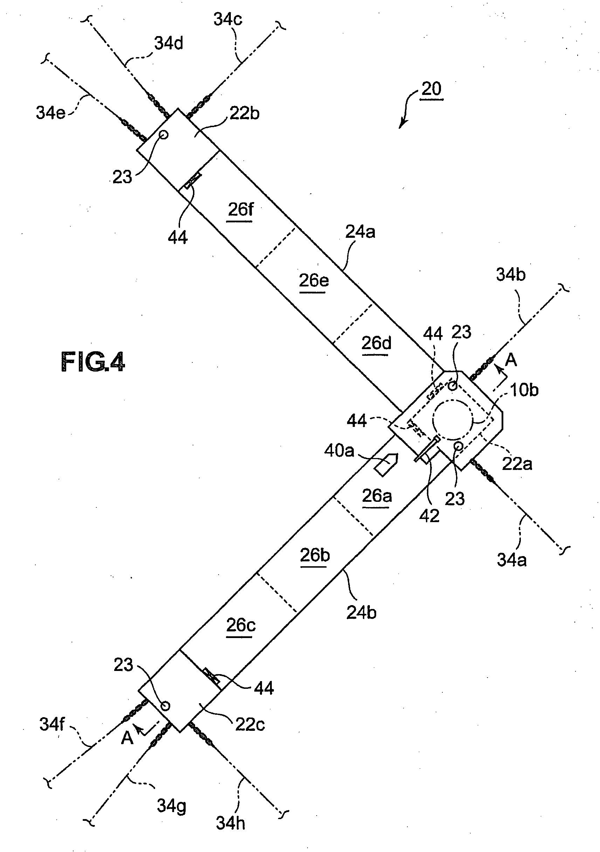

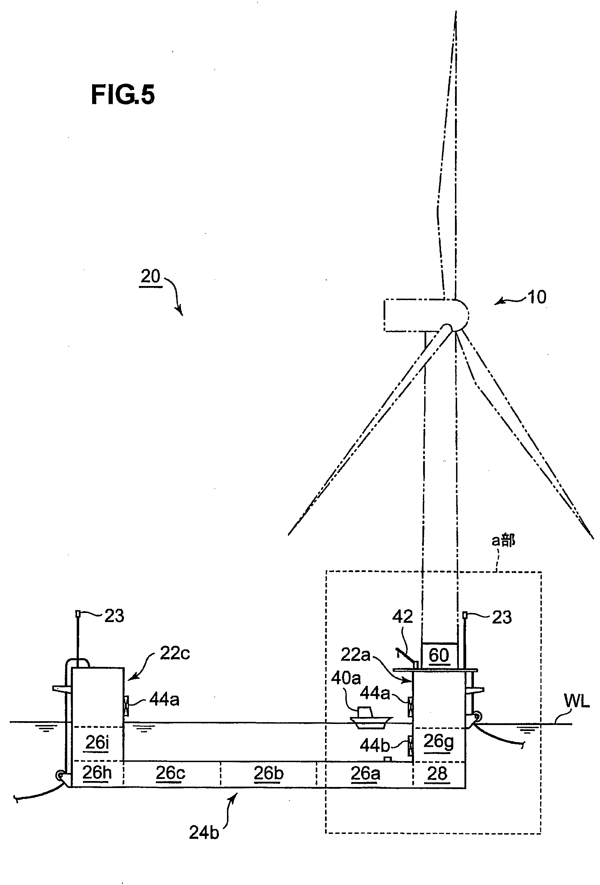

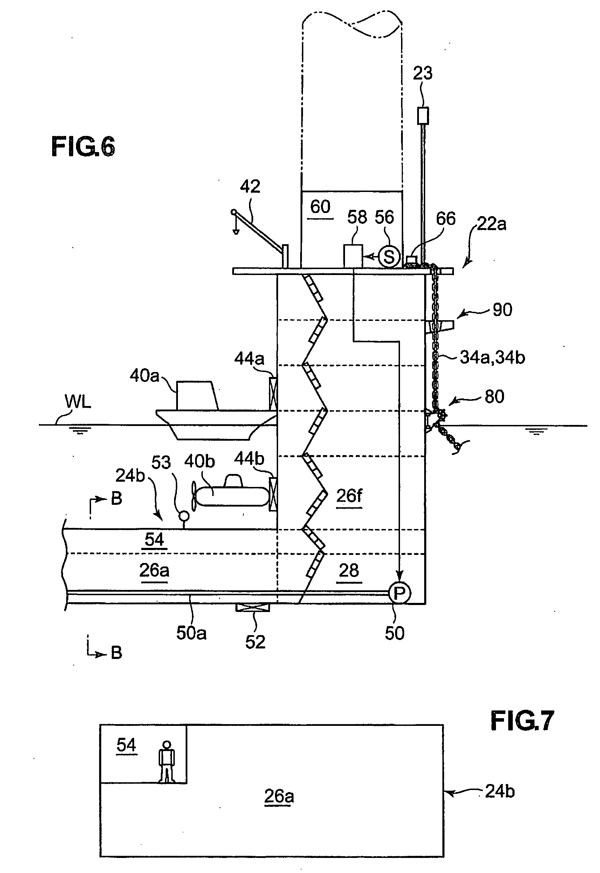

FIG. 4 is a planar view of the floating type wind turbine generating apparatus according to one embodiment of the present invention. FIG. 5 is a cross-sectional view taken along line A-A of FIG. 4. FIG. 6 is a cross-sectional enlarged view of the part "a" of FIG. 5. FIG. 7 is a cross-sectional view taken along line B-B of FIG. 6.

The above described column 22 and lower hull 24 have a cross-section of a hollow shape. As shown in FIGs. 4 and 5, a water storage space for storing the ballast water is formed inside the column 22 and the lower hull 24.

In one embodiment of the present invention, the water storage space formed inside the lower hull 24 is divided into a plurality of auxiliary rooms (water storage rooms) 26 in the longitudinal direction of the lower hull 24. For instance, as shown in FIGs. 4 and 5, three auxiliary rooms (26a∼26c and 26d∼26f) are formed in the longitudinal direction inside the first lower hull 24a and the second lower hull 24b.

As shown in FIG. 5, two auxiliary rooms 26i, 26h are formed inside the third column 22c by being divided in the vertical direction. Although not shown, two auxiliary rooms are similarly formed inside the second column 22b by being divided in the vertical direction.

A pump chamber 28 is formed inside the first column 22a beside the water storage room 26g. As shown in FIG. 6, a pump 50 is disposed inside the pump chamber 28. The pump 50 is connected to each of the auxiliary rooms 26 of the water storage room 26 via a discharging pipe 50a. By driving the pump 50, it is possible to discharge the ballast water stored inside each of the auxiliary rooms 26 outside the floating body 20 as well as to transfer the ballast water stored in each of the auxiliary rooms 26 to another one of the auxiliary rooms 26.

Also shown in FIG. 6, a gate 52 is provided for each of the auxiliary rooms 26, by which the auxiliary rooms 26 is communicated to or shut from outside. The gate 52 is disposed below the waterline as of the time before the floating body 20 is sunk underwater so as to facilitate injection of the ballast water from outside. Also, an air valve 53 is disposed on the upper part of each of the auxiliary rooms 26. When the gate 52 is opened, the air inside the auxiliary room 26 is discharged from the air valve 53 and the ballast water is injected into the auxiliary room 26.

As described above, in one embodiment of the present invention, it is possible to inject and discharge the ballast water to and from not only the water storage room 26 as a whole but also a plurality of the auxiliary rooms 26 using the above described pump 50, discharge pipe 50a, gate 52, and air valve 53.

As described above, the water storage room 26 capable of adjusting the stored volume of the ballast water is provided inside the floating body 20. As a result, it is possible to adjust the volume of the ballast water to change the degree of sinking of the floating body 20, and thus to appropriately adjust the degree of sinking for the floating body 20 so as to stabilize the floating body 20 against the drift force F, F' and the rotational moment M, M'.

Further, as the water storage space 26 is divided into a plurality of auxiliary rooms 26 in the longitudinal direction of the lower hull 24, it is possible to prevent the floating body 20 from slanting considerably due to the imbalance of the gravity center of the floating body 20 caused by the ballast water being accumulated in one direction inside the floating body 20. Also, as a plurality of auxiliary rooms 26 is configured such that the ballast water is injected and discharged to and from each of the auxiliary rooms 26 independently, it is possible to control the gravity center position of the floating body 20 by appropriately adjusting the volume of the ballast water inside each of the auxiliary rooms 26.

It is difficult for the floating body 20 with the lower hulls 24 entirely under the water to return to the original attitude once it is slanted by external force such as waves acting thereon. Thus, the present configuration, in which the water storage room 26 inside the lower hulls 24 is divided into a plurality of the auxiliary rooms 26 in the longitudinal direction, is effective in securing the stability of the floating body 20.

In one embodiment of the present invention, as shown in FIG. 6, a attitude detection sensor 56 for detecting the slant of the floating body 20 and a controller 58 for controlling operation of the above described pump 50 are disposed in an electric room 60 provided at the base of the tower 10b. When the attitude detection sensor 56 detects a slant of the floating body 20 greater than a predetermined value, the pump 50 starts to operate. As a result, the volume of the ballast water is automatically controlled so that the floating body 20 becomes horizontal again.

In one embodiment of the present invention, as shown in FIG. 7, a communication path 54 is formed inside the lower hull 24. The communication path 54 is watertightly separated from the auxiliary room 26 where the ballast water is stored. The communication path 54 may be constituted of a pipe. The communication path 54 allows persons and objects to transfer between the columns 22 even when the ballast water is stored in the auxiliary room 26.

Also, as shown in FIGs. 4 and 5, a beacon light 23 is disposed on the top face of the column 22, serving to signal the existence of the installation for ships passing by.

In one embodiment of the present invention, as shown in FIGs. 4 and 5, an entrance 44 for providing access inside the columns 22 is provided for the side face of the columns 22. When transferring persons or objects to the floating type wind turbine generating apparatus 1 moored on the ocean and the like, the persons or objects are transferred to the floating type wind turbine generating apparatus 1 from the land by a ship 40a or a submarine 40b and then access the inside of the column 22 from the entrance 44.

The above described entrance 44 is disposed above the connection between the column 22 and the lower hull 24. The water depth from the water surface to the part above the lower hull 24 is shallow compared to that from the water surface to other parts. Thus, the part above the lower hull 24 is less affected by the waves. Therefore, by disposing the entrance 44 on the side face of the column 22 above the connection part between the column 22 and the lower hull 24, access to the floating type wind turbine generating apparatus 1 by the ship 40a or the submarine 40b is facilitated.

Further, as shown in FIG. 4, the above described mooring cables 34 extend in such a direction that the mooring cables 34 extend away from the lower hull 24 and do not intersect with the lower hull 24. Thus, the mooring cables 34 do not interfere with the access of the ship 40a or the submarine 40b to the entrance 44 of the floating type wind turbine generating apparatus 1.

Further, as shown in FIGs. 5 and 6, a hoisting device 42 such as a crane is disposed on the top face of the column 22 above the entrance 44. By providing the hoisting device 42 above the entrance 44, it is possible to easily perform the work for carrying the cargo on the ship 40a into the column 22.

In one embodiment of the present invention, as shown in FIGs. 5 and 6, an entrance 44a is disposed to on such a position that becomes above the waterline WL in the state where the lower hull 24 is entirely underwater. By providing the entrance 44a above the waterline WL, the access to the inside of the column 22 by the ship 40a is facilitated.

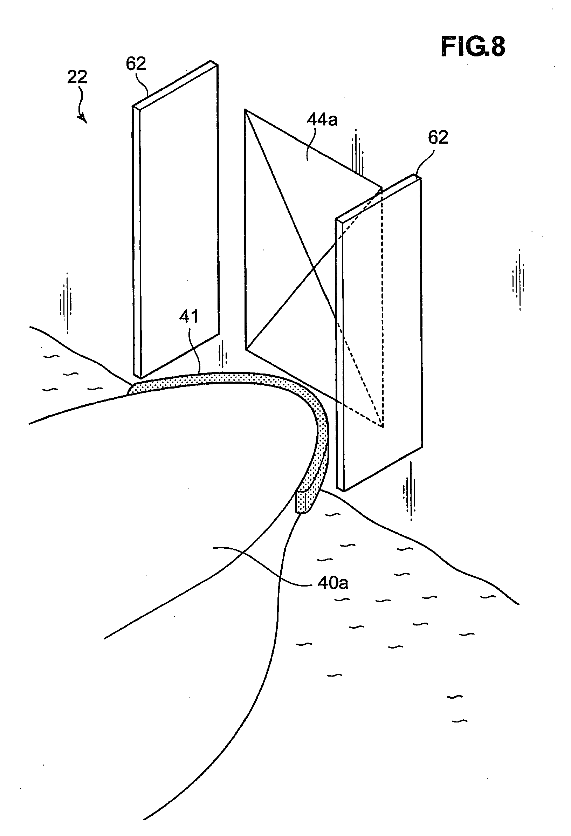

In one embodiment of the present invention, as shown in FIG. 8, a pair of protrusions 62, 62 extending in the vertical direction is disposed to protrude from the side face of the column 22 for which the entrance 44a is provided. The pair of the protrusions 62, 62 is arranged with an interval between each other so that the bow of the ship 40a is housed between the protrusions, the ship being in the state where the end of the bow is in contact with the side face of the column 22. An elastic member 41 such as rubber is attached to the bow of the ship 40a to protect the bow.

With the above pair of the protrusions 62 disposed on the side face of the column 22, it is possible to dock the ship 40a to the shore by inserting the bow between the protrusions 62 in the state of the ship 40a being propelled. As a result, the influence by the wave and the like on the ship 40a is reduced, thus facilitating the access to the entrance 44a.

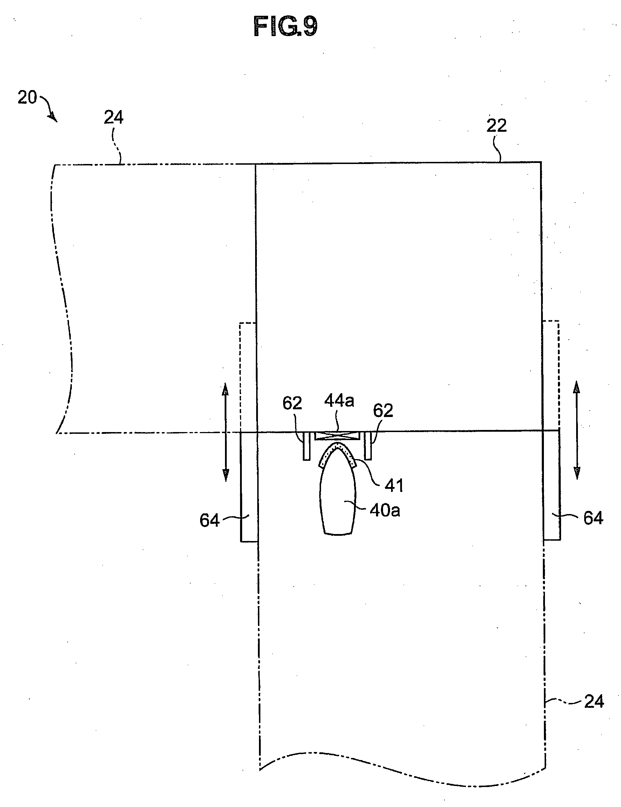

In one embodiment of the present invention, as shown in FIG. 9, a breakwater wall 64 is disposed so as to surround the entrance 44a of the floating body 20. The breakwater wall 64 is configured movable so as not to interfere with the access of the ship 40a. The breakwater wall 64 is normally disposed on the position where the breakwater wall 64 does not interfere with the access of the ship 40a, for instance, along the side face of the column 22, and is configured to move so as to surround the entrance 44a when the ship 40a is in contact with the side face of the column 22. As a result, the breakwater wall 64 serves to restrain swaying of the ship 40a due to the waves.

In one embodiment of the present invention, as shown in FIGs. 5 and 6, an entrance 44b is disposed below the waterline WL of the state where the lower hull 24 is entirely underwater. In one embodiment, the entrance 44b is configured as a hatch to which a submarine 40b is connectable in the state of being watertight as shown in FIG. 6.

With such entrance 44b disposed on the side face of the column 22, it is possible for the submarine 40b to access the entrance 44b in the state of being submerged. The submarine 40b navigating underwater is less affected by waves, which is advantageous when accessing the floating type wind turbine generating apparatus 1 during bad weather.

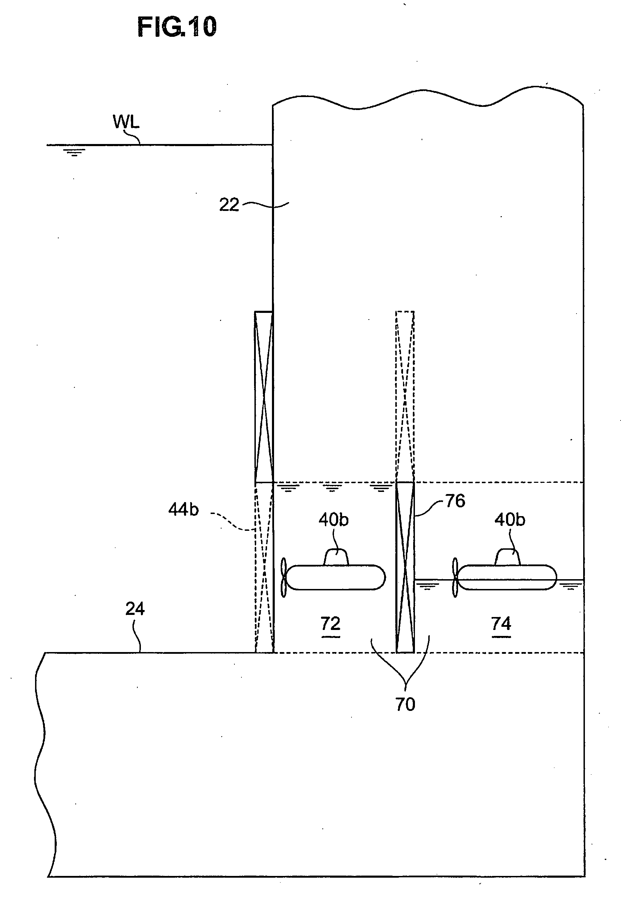

In one embodiment of the present invention, as shown in FIG. 10, the entrance 44b is disposed so as to position below the waterline WL while the floating type wind turbine generating apparatus 1 is being moored, and formed into the size that allows the submarine 40b to pass through the entrance 44b. A storage room 70 is formed inside the column 22, which is capable of housing the submarine 40b that has passed through the entrance 44b.

The storage room 70 includes the first room 72 separated from outside by the entrance 44b and the second room 74 separated from the first room 72 by the water blocking gate 76. Once the submarine 40b enters the first room 72 via the entrance 44b, the entrance 44b is closed. Then, by opening the water blocking gate 76 while the entrance 44b is closed, it is possible for the submarine 40b to enter the pool formed inside the second room 74.

With the above storage room 70 formed inside the column 22, it is possible for the submarine 40b to access the entrance 44b while being continuously submerged, which is advantageous during bad weather. Also, since it is possible to house the entire submarine 40b in the storage room 70, it is possible to easily transfer a number of persons and cargos into the column 22.

In one embodiment of the present invention, as shown in FIG. 6, a guide part 80 for guiding the mooring cables 34a, 34b along the side face of the first column 22a is disposed on the side face of the first column 22a. Also, a stopper 90 for preventing the mooring cables 34a, 34b guided by the guide part 80 from falling downward is disposed above the guide part 80. Moreover, a pressing member 66 for pressing and fixing the mooring cables 34a, 34b is disposed on the top face of the first column 22a. One guide part 80, stopper 90, and pressing member are provided for each corresponding one of the mooring cables connected to each of the three columns 22.

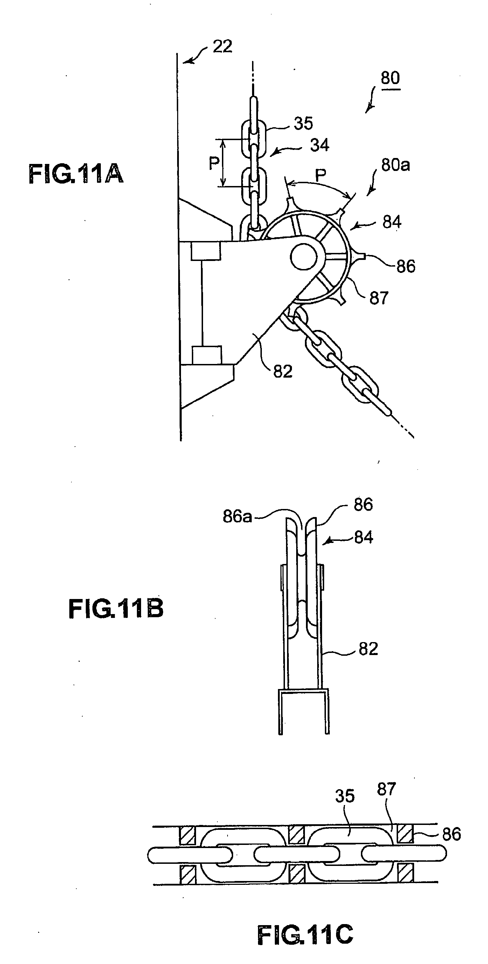

FIG. 11A is a side view, FIG. 11B is a front view, and FIG. 11C is a top view of the guide part according to one embodiment of the present invention.

As shown in FIGs. 11A to 11C, the guide part 80 according to one embodiment of the present invention comprises a fairlead 80a arranged so that the mooring cable 34 is held between the fairlead 80a and the side face of the column 22. Also, the mooring cable 34 has a chain shape where a plurality of ring members 35 are linked, the ring members 35 being arranged alternately in the longitudinal and lateral direction.

The fairlead 80a includes a pair of supporting members 82 protruding from the side face of the column 22 and a rotating body 84 which is rotatably supported between the pair of the supporting members 82. A plurality of projections 86 is formed on the outer circumference of the rotating body 84 with a pitch corresponding to the length of the ring member 35, for instance, a pitch corresponding to the distance P between the centers of the ring members 35 that are distanced by one ring member in between as shown in FIG. 11. A slit 86a is provided for the projection 86 at the center part as seen from the front as shown in FIG. 11B. The ring member 35 arranged in the longitudinal direction with respect to the rotating body 84 is inserted into the slit 86a. Also, as shown in FIG. 11C, the ring member 35 arranged in the lateral direction with respect to the rotating body 84 is housed in the flat portion 87 between the adjacent projections 86 on the outer circumference of the rotating body 84. By the ring member 35 being inserted into the slit 86a of the projection 86, the mooring cable 34 is guided along the side face of the column 22 in the vertical direction.

With the above described guide part 80 and fairlead 80a, the mooring cable 34 extending slantwise from the anchor 32 toward the side face of the column 22 in catenary curve is smoothly guided along the side face of the column 22 in the vertical direction. Also, by the ring member 35 being inserted into the slit 86a of the projection 86 formed on the outer circumference of the rotating member 84 of the fairlead 80a, the mooring cable 34 is securely guided without misalignment.

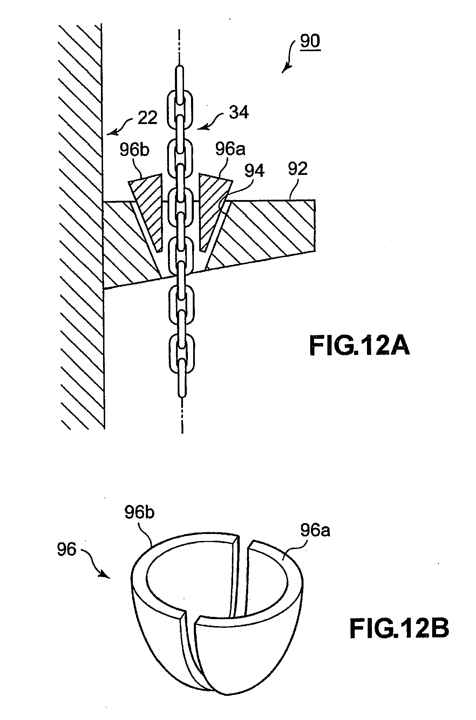

FIG. 12A is a cross-sectional view of the stopper according to one embodiment of the present invention.

As shown in FIG. 12A, the stopper 90 includes a protruding member 92 protruding from the side face of the column 22 and wedge members 96a, 96b having a wedge shape.

As also shown in FIG. 12A, a through-hole 94 is formed on the protruding member 92, whose opening increases upward in size, and the mooring cable 34 is inserted through the through-hole 94. In the state where the mooring cable 34 is inserted through the through-hole 94, the wedge members 96a, 96b are fit into the through-hole 94 from above. As a result, by the so-called wedge effect, the mooring cable 34 is fixed by the frictional force between the mooring cable 34 and the wedge members 96a, 96b to prevent the mooring cable 34 from falling down.

In one embodiment of the present invention, as a wedge member 96, wedge members 96a, 96b are suitably used, which are formed by halving a cup-shape member having a shape that can be fit into the through-hole 94 from above as shown in FIG. 12B.

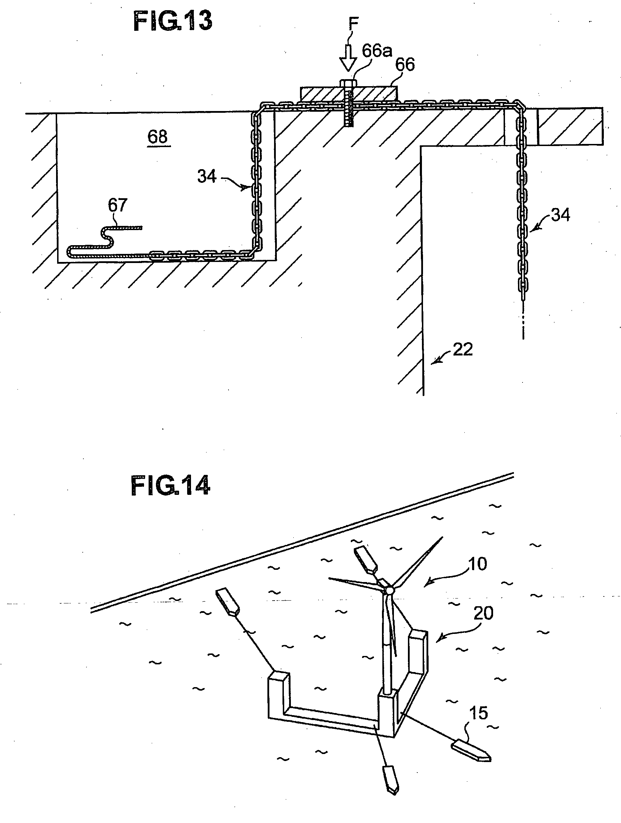

FIG. 13 is a cross-sectional view of a part of the top face of the column according to one embodiment of the present invention.

As shown in FIG. 13, a pressing member 66 is disposed on the top face of the column 22 fixed onto the top face of the column 22 by a bolt 66a in the state where the mooring cable 34 is held between the pressing member 66 and the top face of the column 22. The mooring cable 34 is forced against the top face of the column 22 by the pressing member 66 with the predetermined pressing force F. With such pressing member 66 being provided, the mooring cable 34 guided along the side face of the column 22 is fixed onto the top face of the column 22. As a result, it is possible to prevent the end of the mooring cable 34 from moving freely.

As shown in FIG. 13, a housing space 68 for housing the mooring cable 34 is provided inside the column 22. The housing space 68 has its opening formed on the top face of the column 22 and houses an extra part at the end of the mooring cable 34 fixed by the pressing member 66.

A rope 67 is connected to the end of the mooring cable 34 at the side connected to the column. By connecting the rope 67 to the end of the mooring cable 34, it would be easier to handle the mooring cable 34 in the case where the mooring cable 34 is arranged along the side face of the column 22 via the guide part 80 and the like.

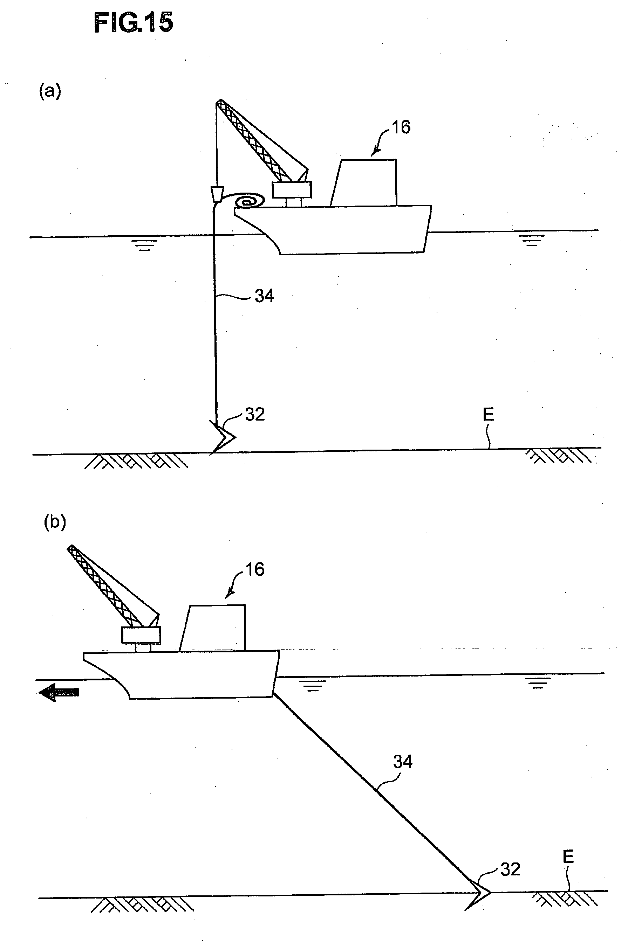

Next, a mooring method for the floating type wind turbine generating apparatus 1 with the above configuration will be described in accordance with FIGs. 14 to 16. FIG. 14 is an illustration of the state where the floating type wind turbine generating apparatus is being towed. FIG. 15A is an illustration of the step of fixing the anchor to the predetermined position on the bottom of the water. FIG. 15B is an illustration of the step of connecting the mooring cable and the floating body.

In the mooring method of the floating type wind turbine generating apparatus 1 according to at least one embodiment of the present invention, the floating body 20 is assembled in the state of being on the land or in contact with the shore. The wind turbine generator 10 is installed on the floating body 20. Then, as shown in FIG. 14, the floating body 20 is towed to the prescribed mooring position on the ocean by four towing ships 15, for instance.

Further, as shown in FIG. 15A, a ship other than the floating body 20, a crane vessel 16 for instance, is used to sink the anchor 32 connected to the above described mooring cable 34 to a predetermined position on the bottom of the water (sinking step). Then, as shown in FIG. 15B, the crane vessel 16 is used to tow the mooring cable 34 to fix the sunken anchor 32 to the bottom of the water (towing step).

In the towing step, based on the output torque of the power supply for towing the mooring cable 34 or the tension of the mooring cable 34 being towed, the holding power of the mooring cable 34 is measured. As a result, it is possible to easily measure the holding power of the mooring cable 34 and thus to easily determine whether the anchor 32 is appropriately fixed on the bottom of the water.

Then, the sinking step and towing step are iterated for each of the mooring cables 34 to fix the anchors 32 of the mooring cables 34 to the predetermined position on the bottom of the water. At this time, by coupling the mooring cables 34 together and towing the coupled mooring cables 34 collectively by the crane vessel 16, it is possible to fix the sunken anchors collectively on the bottom of the water. As a result, it is possible to reduce the number of the towing operations, thereby increasing efficiency of the mooring process and reducing the cost.

After having fixed the anchors 32 to the bottom of the water by the crane vessel 16, the rope 67 connected to the end of the mooring cable 34 is attached to a buoy, which is then floated on the prescribed mooring position. Then, the mooring cables 34 attached to the buoys is retrieved by the floating body 20 towed to the prescribed mooring position, and the retrieved mooring cables 34 are connected to the columns 22 as shown in the above described FIG. 3. Finally, by injecting the ballast water into the water storage space inside the floating body 20, the floating type wind turbine generating apparatus 1 is moored on the ocean and the like in the state where the waterline WL is positioned above the top face of the lower hull 24.

According to the above mooring method of the floating type wind turbine generating apparatus 1, it is possible to fix the anchors 32 on the predetermined position on the bottom of the water and connect the floating body 20 and the anchors 32 by the mooring cables 34 without providing a crane for the floating body 20 itself. As a result, it is possible to enhance efficiency of the mooring process and to reduce the cost of the mooring process.

Embodiments of the present invention were described in detail above, but the present invention is not limited thereto, and various amendments and modifications may be implemented within a scope that does not depart from the present invention.

### Industrial Applicability

The present invention is applicable to a floating type wind turbine generating apparatus installed on the ocean and the like.

### Reference Signs List

- 1: Floating wind turbine generating apparatus
- 10: Wind turbine generator
- 10a: Nacelle
- 10b: Tower
- 10c: Blade
- 15: Towing ship
- 16: Crane vessel
- 20: Floating body
- 22: Column
- 23: Beacon light
- 24: Lower hull
- 26: Water storage room
- 29: Pump chamber
- 32: Anchor
- 34: Mooring cable
- 35: Ring member
- 40a: Ship
- 40b: Submarine
- 41: Elastic member
- 42: Hoisting device
- 44: Entrance
- 50: Pump
- 50a: Discharging pipe
- 52: Gate
- 53: Air valve
- 54: Communication path
- 56: Attitude detection sensor
- 58: Controller
- 60: Electrical room
- 62: Protrusion
- 64: Breakwater wall
- 66: Pressing part
- 67: Rope
- 68: Housing space
- 70: Storage room
- 72: First room
- 74: Second room
- 76: Water blocking gate
- 80: Guide part
- 80a: Fairlead
- 82: Supporting member
- 84: Rotating body
- 86: Projection
- 86a: Slit
- 87: Flat portion
- 90: Stopper
- 92: Protruding member
- 94: Through-hole
- 96: Wedge member

## Claims

1. A floating type wind turbine generating apparatus comprising:
a wind turbine generator (10);
a floating body (20) including a first column which is disposed on an upwind side in a main wind direction (W) and on which the wind turbine generator (10) is disposed, a second column (22b) and a third column (22c) disposed on a downwind side with respect to the first column in the main wind direction, and two lower hulls (24a, 24b) one of which connecting the first and second columns (22a,22b) and other of which connecting the first and third columns (22a,22c); and
a plurality of mooring cables (34) each of which connecting the floating body (20) and an anchor (32a,32b) fixed on a bottom of a water in a catenary curve,
the floating type wind turbine generating apparatus being **characterized in that** at least two of the mooring cables (34a,34b) are connected to the first column (22a), at least one of the mooring cables (34c,34d,34e) is connected to the second column (22b), and at least one of the mooring cables (34f,34g,34h) is connected to the third column (22c), the mooring cables (34) extending radially from the floating body (20) so as not to intersect with one another in a planar view, **in that**
the at least one mooring cable connected to the second column (22b) includes a rotation preventing mooring cable (34c) extending toward a region (α) on a first column side, the region defined by a bisector (a) at an intersection of the two lower hulls (24a,24b) and by a straight line (b) which is orthogonal to the bisector (a) and which passes through a center of the second column (22b), and **in that**
the at least one mooring cable connected to the third column (22c) includes a rotation preventing mooring cable (34h) extending toward a region (β) on the first column side, the region defined by a bisector (a) at an intersection of the two lower hulls (24a,24b) and by a straight line (c) which is orthogonal to the bisector and which passes through a center of the third column (22c).

2. The floating type wind turbine generating apparatus according to claim 1,
wherein the rotation preventing mooring cable (34c) connected to the second column (22b) extends in a direction orthogonal to an axial direction of the first lower hull (24a) connecting the first and second columns, and
wherein the rotation preventing mooring cable (34h) connected to the third column (22c) extends in a direction orthogonal to an axial direction of the second lower hull (24b) connecting the first and third columns.

3. The floating type wind turbine generating apparatus according to claim 1,
wherein a plurality of the mooring cables (34) is connected to each of the second and third columns.

4. The floating type wind turbine generating apparatus according to claim 1,
wherein each of the first, second and third columns (22a,22b,22c) has a guide part (80) disposed on a side face thereof, the guide part being configured to guide the mooring cable to be connected in a vertical direction along the side face of each of the columns.

5. The floating type wind turbine generating apparatus according to claim 4,
wherein each of the first, second, and third columns (22a,22b,22c) has a stopper (90) disposed above the guide part (80) on the side face thereof, the stopper being configured to prevent the mooring cable guided by the guide part from falling downward, and
wherein the stopper (90) includes:
a protruding member (92) protruding from the side face of each of the columns and having a through-hole (94) into which the mooring cable is insertable and whose opening increases upward in size; and
a wedge member (96a,96b) insertable into the through-hole (94) from above in a state where the mooring cable is inserted through the through-hole.

6. The floating type wind turbine generating apparatus according to claim 4,
wherein the guide part (80) comprises a fairlead (80a) arranged so that the mooring cable is held between the fairlead and the side face of the column.

7. The floating type wind turbine generating apparatus according to claim 6,
wherein the mooring cable (34) has a chain shape of a plurality of linked ring members (35), and
wherein the fairlead (80a) includes:
a pair of supporting members (82) protruding from the side face of each of the columns; and
a rotating body (84) which is rotatably supported between the pair of the supporting members and which has a plurality of projections (86) with a pitch corresponding to a length of each of the ring members, the projections being disposed on an outer circumference of the rotating body along a rotational direction, and
wherein each of the projections (86) has a (86a) slit into which at least one of the ring members (35) is insertable, thereby guiding the mooring cable in the vertical direction along the side face of each of the columns.

8. The floating type wind turbine generating apparatus according to claim 4,
wherein a pressing member (66) is disposed on a top face of each of the first, second, and third columns (22a,22b,22c), the pressing member being configured to force the mooring cable (34) against the top face so as to fix the mooring cable on to the top face.

9. The floating type wind turbine generating apparatus according to claim 8,
wherein the floating body (20) has a housing space inside each of the first, second, and third columns (22a,22b,22c), the housing space (68) having an opening on the top face of said each of the columns and being configured to house the mooring cable (34).

10. The floating type wind turbine generating apparatus according to claim 1, wherein the floating body (20) includes a water storage (26) inside the floating body, the water storage space being configured capable of adjusting a stored amount of a ballast water.

11. The floating type wind turbine generating apparatus according to claim 10, wherein the water storage space provided inside the floating body is divided into a plurality of auxiliary rooms (26) in a longitudinal direction of each of the lower hulls, each of the auxiliary rooms being configured capable of taking in and discharging the ballast water.

12. The floating type wind turbine generating apparatus according to claim 4, wherein a rope (67) is connected to an end of the mooring cable (34) on a side connected to the column.

13. A mooring method for a floating type wind turbine generating apparatus comprising a wind turbine generator (10), a floating body (20) on which the wind turbine generator is installed including a first column (22a) connected to second and third columns (22b,22c) via two lower hulls (24a,24b), and a plurality of mooring cables (34) each of which is connecting the floating body and an anchor (32) fixed on a bottom of a water, the method comprising the steps of:
arranging the floating body (20) so that the first column (22a) is positioned at an upwind side in a main wind direction and the second and third columns (22b,22c) are positioned at a downwind side with respect to the first column in the main wind direction;
connecting at least two of the plurality of the mooring cables (34a,34b) to the first column (22a) in a catenary curve;
connecting at least one of the plurality of the mooring cables (34c,34d,34e) to the second column (22b) in the catenary curve;
connecting at least one of the plurality of the mooring cables (34f,34g,34h) to the third column (22c) in the catenary curve; and
arranging the mooring cables (34) radially so as not to intersect with one another,
wherein the at least one mooring cable connected to the second column (22b) includes a rotation preventing mooring cable (34c) connected so as to extend toward a region (α) on the first column side, the region defined by a bisector (a) at an intersection of the two lower hulls (24a,24b) and by a straight line (b) which is orthogonal to the bisector and which passes through a center of the second column (22b), and
wherein the at least one mooring cable connected to the third column (22c) includes a rotation preventing mooring cable (34h) extending toward a region (β) on the first column side, the region defined by a bisector (a) at an intersection of the two lower hulls (24a,24b) and by a straight line (c) which is orthogonal to the bisector and which passes through a center of the third column (22c).

14. The mooring method for a floating type wind turbine generating apparatus according to claim 13,
wherein the rotation preventing mooring cable (34c) connected to the second column (22b) is connected so as to extend in a direction orthogonal to an axial direction of the first lower hull (24a) connecting the first and second columns, and
wherein the rotation preventing mooring cable (34h) connected to the third column (22c) is connected so as to extend in a direction orthogonal to an axial direction of the second lower hull (24b) connecting the first and third columns.

15. The mooring method for a floating type wind turbine generating apparatus according to claim 14,
wherein a plurality of the mooring cables (34) is connected to each of the second and third columns (22b,22c).

16. The mooring method for a floating type wind turbine generating apparatus according to claim 13, further comprising,
before connecting the mooring cables (34) to the floating body (20), the steps of:
sinking each of the anchors (32) connected to each of the mooring cables to a predetermined position at the bottom of the water by a ship independent of the floating body; and
towing each of the mooring cables so as to fix each of the sunken anchors on the water bottom.

17. The mooring method for a floating type wind turbine generating apparatus according to claim 16, wherein, in the towing step,
the mooring cables (34) are combined with one another and the combined mooring cables are collectively towed to fix the sunken anchors (32) collectively on the water bottom.

18. The mooring method for a floating type wind turbine generating apparatus according to claim 16, wherein, in the towing step,
a holding power of each of the mooring cables (34) is measured based on an output torque of a power supply for towing the mooring cables or a tension of each of the mooring cables being towed.

## Patentansprüche

1. Schwimmende Windturbinen-Stromerzeugungsvorrichtung, umfassend:
einen Windturbinengenerator (10),
einen Schwimmkörper (20), enthaltend: eine erste Säule, die auf einer Luvseite in einer Hauptwindrichtung (W) angeordnet ist und auf der der Windturbinengenerator (10) angeordnet ist, eine zweite Säule (22b) und eine dritte Säule (22c), die auf einer Leeseite mit Bezug auf die erste Säule in der Hauptwindrichtung angeordnet sind, und zwei untere Rümpfe (24a, 24b), von denen einer die erste und die zweite Säule (22a, 22b) verbindet und der andere die erste und die dritte Säule (22a, 22c) verbindet, und
mehrere Vertäuseile (34), die jeweils den Schwimmkörper (20) und einen Anker (32a, 32b) verbinden, der am Grund eines Gewässers in einer Kettenkurve fixiert ist,
wobei schwimmende Windturbinen-Stromerzeugungsvorrichtung **dadurch gekennzeichnet ist, dass**
mindestens zwei der Vertäuseile (34a, 34b) mit der ersten Säule (22a) verbunden sind, mindestens eines der Vertäuseile (34c, 34d, 34e) mit der zweiten Säule (22b) verbunden ist und mindestens eines der Vertäuseile (34f, 34g, 34h) mit der dritten Säule (22c) verbunden ist, wobei sich die Vertäuseile (34) radial so von dem Schwimmkörper (20) erstrecken, dass sie sich in einer Draufsicht nicht gegenseitig kreuzen, dadurch, dass
das mindestens eine Vertäuseil, das mit der zweiten Säule (22b) verbunden ist, ein rotationsverhinderndes Vertäuseil (34c) enthält, das sich in Richtung einer Region (α) auf der Seite der ersten Säule erstreckt, wobei die Region durch eine Halbierende (a) an einem Schnittpunkt der zwei unteren Rümpfe (24a, 24b) und durch eine gerade Linie (b), die orthogonal zu der Halbierenden (a) verläuft und durch eine Mitte der zweiten Säule (22b) hindurch verläuft, definiert wird, und dadurch, dass
das mindestens eine Vertäuseil, das mit der dritten Säule (22c) verbunden ist, ein rotationsverhinderndes Vertäuseil (34h) enthält, das sich in Richtung einer Region (β) auf der Seite der ersten Säule erstreckt, wobei die Region durch eine Halbierende (a) an einem Schnittpunkt der zwei unteren Rümpfe (24a, 24b) und durch eine gerade Linie (c), die orthogonal zu der Halbierenden verläuft und die durch eine Mitte der dritten Säule (22c) hindurch verläuft, definiert wird.

2. Schwimmende Windturbinen-Stromerzeugungsvorrichtung nach Anspruch 1,
wobei sich das rotationsverhindernde Vertäuseil (34c), das mit der zweiten Säule (22b) verbunden ist, in einer Richtung orthogonal zu einer axialen Richtung des ersten unteren Rumpfes (24a) erstreckt, der die erste und die zweite Säule verbindet, und
wobei sich das rotationsverhindernde Vertäuseil (34h), das mit der dritten Säule (22c) verbunden ist, in einer Richtung orthogonal zu einer axialen Richtung des zweiten unteren Rumpfes (24b) erstreckt, der die erste und die dritte Säule verbindet.

3. Schwimmende Windturbinen-Stromerzeugungsvorrichtung nach Anspruch 1,
wobei mehrere der Vertäuseile (34) mit jeder der zweiten und der dritten Säule verbunden sind.

4. Schwimmende Windturbinen-Stromerzeugungsvorrichtung nach Anspruch 1,
wobei jede der ersten, zweiten und dritten Säule (22a, 22b, 22c) einen Führungsteil (80) hat, der an einer Seitenfläche davon angeordnet ist, wobei der Führungsteil dafür konfiguriert ist, das zu verbindende Vertäuseil in einer vertikalen Richtung entlang der Seitenfläche einer jeden der Säulen zu führen.

5. Schwimmende Windturbinen-Stromerzeugungsvorrichtung nach Anspruch 4,
wobei jede der ersten, zweiten und dritten Säule (22a, 22b, 22c) einen Endanschlag (90) hat, der über dem Führungsteil (80) auf der Seitenfläche davon angeordnet ist, wobei der Endanschlag dafür konfiguriert ist zu verhindern, dass das durch den Führungsteil geführte Vertäuseil nach unten fällt, und
wobei der Endanschlag (90) enthält:
ein hervorstehendes Element (92), das von der Seitenfläche einer jeden der Säulen hervorsteht und ein Durchgangsloch (94) aufweist, in das das Vertäuseil eingeführt werden kann und dessen Öffnung nach oben hin größer wird, und
ein Keilelement (96a, 96b), das in das Durchgangsloch (94) von oben eingeführt werden kann, während das Vertäuseil durch das Durchgangsloch hindurchgeführt ist.

6. Schwimmende Windturbinen-Stromerzeugungsvorrichtung nach Anspruch 4,
wobei der Führungsteil (80) eine Leitrolle (80a) umfasst, die so angeordnet ist, dass das Vertäuseil zwischen der Leitrolle und der Seitenfläche der Säule gehalten wird.

7. Schwimmende Windturbinen-Stromerzeugungsvorrichtung nach Anspruch 6,
wobei das Vertäuseil (34) eine Kettenform aus mehreren verbundenen Ringelementen (35) hat, und
wobei die Leitrolle (80a) enthält:
ein Paar Stützelemente (82), die von der Seitenfläche einer jeden der Säulen hervorstehen, und
einen Rotationskörper (84), der zwischen dem Paar der Stützelemente drehbar gestützt wird und der mehrere Vorsprünge (86) aufweist, deren Mittenabstand einer Länge eines jeden der Ringelemente entspricht, wobei die Vorsprünge an einem Außenumfang des Rotationskörpers entlang einer Drehrichtung angeordnet sind, und
wobei jeder der Vorsprünge (86) einen Schlitz (86a) hat, in den mindestens eines der Ringelemente (35) eingeführt werden kann, wodurch das Vertäuseil in der vertikalen Richtung entlang der Seitenfläche einer jeden der Säulen geführt wird.

8. Schwimmende Windturbinen-Stromerzeugungsvorrichtung nach Anspruch 4,
wobei ein Presselement (66) auf einer Oberseite einer jeden der ersten, zweiten und dritten Säule (22a, 22b, 22c) angeordnet ist, wobei das Presselement dafür konfiguriert ist, das Vertäuseil (34) so gegen die Oberseite so drängen, dass das Vertäuseil an der Oberseite fixiert wird.

9. Schwimmende Windturbinen-Stromerzeugungsvorrichtung nach Anspruch 8,
wobei der Schwimmkörper (20) einen Aufnahmeraum in jeder der ersten, zweiten und dritten Säule (22a, 22b, 22c) hat, wobei der Aufnahmeraum (68) eine Öffnung auf der Oberseite einer jeden der Säulen aufweist und dafür konfiguriert ist, das Vertäuseil (34) aufzunehmen.

10. Schwimmende Windturbinen-Stromerzeugungsvorrichtung nach Anspruch 1, wobei der Schwimmkörper (20) in seinem Inneren einen Wasserspeicher (26) enthält, wobei der Wasserspeicherraum so konfiguriert ist, dass er eine gespeicherte Menge an Ballastwasser justieren kann.

11. Schwimmende Windturbinen-Stromerzeugungsvorrichtung nach Anspruch 10, wobei der im Inneren des Schwimmkörpers angeordnete Wasserspeicherraum in einer Längsrichtung eines jeden der unteren Rümpfe in mehrere Hilfsräume (26) unterteilt ist, wobei jeder der Hilfsräume so konfiguriert ist, dass er das Ballastwasser aufnehmen und ablassen kann.

12. Schwimmende Windturbinen-Stromerzeugungsvorrichtung nach Anspruch 4, wobei ein Seil (67) mit einem Ende des Vertäuseils (34) auf einer mit der Säule verbundenen Seite verbunden ist.

13. Vertäuverfahren für eine schwimmende Windturbinen-Stromerzeugungsvorrichtung, umfassend: einen Windturbinengenerator (10), einen Schwimmkörper (20), auf dem der Windturbinengenerator montiert ist und der eine erste Säule (22a) enthält, die mit einer zweiten und einer dritten Säule (22b, 22c) über zwei untere Rümpfe (24a, 24b) verbunden ist, und mehrere Vertäuseile (34), von denen jedes den Schwimmkörper und einen Anker (32), der am Grund eines Gewässers fixiert ist, verbindet, wobei das Verfahren folgende Schritte umfasst:
Anordnen des Schwimmkörpers (20) so, dass die erste Säule (22a) auf einer Luvseite in einer Hauptwindrichtung positioniert ist und die zweite und die dritte Säule (22b, 22c) auf einer Leeseite mit Bezug auf die erste Säule in der Hauptwindrichtung positioniert sind,
Verbinden mindestens zwei der mehreren Vertäuseile (34a, 34b) mit der ersten Säule (22a) in einer Kettenkurve,
Verbinden mindestens eines der mehreren Vertäuseile (34c, 34d, 34e) mit der zweiten Säule (22b) in der Kettenkurve,
Verbinden mindestens eines der mehreren Vertäuseile (34f, 34g, 34h) mit der dritten Säule (22c) in der Kettenkurve, und
Anordnen der Vertäuseile (34) radial so, dass sie einander nicht überkreuzen,
wobei das mindestens eine Vertäuseil, das mit der zweiten Säule (22b) verbunden ist, ein rotationsverhinderndes Vertäuseil (34c) enthält, das so verbunden ist, dass es sich in Richtung einer Region (α) auf der Seite der ersten Säule erstreckt, wobei die Region durch eine Halbierende (a) an einem Schnittpunkt der zwei unteren Rümpfe (24a, 24b) und durch eine gerade Linie (b), die orthogonal zu der Halbierenden verläuft und die durch eine Mitte der zweiten Säule (22b) hindurch verläuft, definiert wird, und
wobei das mindestens eine Vertäuseil, das mit der dritten Säule (22c) verbunden ist, ein rotationsverhinderndes Vertäuseil (34h) enthält, das sich in Richtung einer Region (β) auf der Seite der ersten Säule erstreckt, wobei die Region durch eine Halbierende (a) an einem Schnittpunkt der zwei unteren Rümpfe (24a, 24b) und durch eine gerade Linie (c), die orthogonal zu der Halbierenden verläuft und die durch eine Mitte der dritten Säule (22c) hindurch verläuft, definiert wird.

14. Vertäuverfahren für eine schwimmende Windturbinen-Stromerzeugungsvorrichtung nach Anspruch 13,
wobei das rotationsverhindernde Vertäuseil (34c), das mit der zweiten Säule (22b) verbunden ist, so verbunden ist, dass es sich in einer Richtung orthogonal zu einer axialen Richtung des ersten unteren Rumpfes (24a) erstreckt, der die erste und die zweite Säule verbindet, und
wobei das rotationsverhindernde Vertäuseil (34h), das mit der dritten Säule (22c) verbunden ist, so verbunden ist, dass es sich in einer Richtung orthogonal zu einer axialen Richtung des zweiten unteren Rumpfes (24b) erstreckt, der die erste und die dritte Säule verbindet.

15. Vertäuverfahren für eine schwimmende Windturbinen-Stromerzeugungsvorrichtung nach Anspruch 14,
wobei mehrere der Vertäuseile (34) mit jeder der zweiten und der dritten Säule (22b, 22c) verbunden sind.

16. Vertäuverfahren für eine schwimmende Windturbinen-Stromerzeugungsvorrichtung nach Anspruch 13, das ferner vor dem Verbinden der Vertäuseile (34) mit dem Schwimmkörper (20) folgende Schritte umfasst:
Versenken eines jeden der Anker (32), die mit jedem der Vertäuseile verbunden sind, auf eine zuvor festgelegte Position am Grund des Gewässers durch ein von dem Schwimmkörper unabhängiges Schiff, und
Ziehen eines jeden der Vertäuseile so, dass jeder der versenkten Anker am Grund des Gewässers fixiert wird.

17. Vertäuverfahren für eine schwimmende Windturbinen-Stromerzeugungsvorrichtung nach Anspruch 16, wobei in dem Schritt des Ziehens:
die Vertäuseile (34) miteinander kombiniert werden und die kombinierten Vertäuseile gemeinsam gezogen werden, um die versenkten Anker (32) gemeinsam am Grund des Gewässers zu fixieren.

18. Vertäuverfahren für eine schwimmende Windturbinen-Stromerzeugungsvorrichtung nach Anspruch 16, wobei in dem Schritt des Ziehens:
eine Haltekraft eines jeden der Vertäuseile (34) auf der Basis eines Leistungsabgabe-Drehmoments einer Kraftabgabevorrichtung zum Ziehen der Vertäuseile oder einer Spannung eines jeden der gezogenen Vertäuseile gemessen wird.

## Revendications

1. Dispositif générateur à turbine éolienne de type flottant, comprenant :
un générateur à turbine éolienne (10) ;
un corps flottant (20) comprenant une première colonne qui est agencée sur un côté face au vent suivant une direction principale du vent (W) et sur laquelle est agencé le générateur à turbine éolienne (10), une deuxième colonne (22b) et une troisième colonne (22c) agencées sur un côté sous le vent par rapport à la première colonne suivant la direction principale du vent, et deux coques inférieures (24a, 24b) l'une d'entre elle reliant les première et deuxième colonnes (22a, 22b) et l'autre reliant les première et troisième colonnes (22a, 22c) ; et
une pluralité de câbles d'amarrage (34) chacun d'entre eux reliant le corps flottant (20) et une ancre (32a, 32b) fixée sur un fond d'une eau suivant une chaînette,
le dispositif générateur à turbine éolienne étant **caractérisé en ce que**
au moins deux des câbles d'amarrage (34a, 34b) sont reliés à la première colonne (22a), au moins un des câbles d'amarrage (34c, 34d, 34e) est relié à la deuxième colonne (22b) et au moins un des câbles d'amarrage (34f, 34g, 34h) est relié à la troisième colonne (22c), les câbles d'amarrage (34) s'étendant radialement à partir du corps flottant (20) de façon à ce qu'ils ne se croisent pas l'un par rapport à l'autre dans une vue plane, **en ce que**
le au moins un câble d'amarrage relié à la deuxième colonne (22b) comprend un câble d'amarrage empêchant une rotation (34c) s'étendant vers une région (α) sur un côté de la première colonne, la région étant définie par une bissectrice (a) à une intersection des deux coques inférieures (24a, 24b) et par une ligne droite (b) perpendiculaire à la bissectrice (a) et qui traverse un centre de la deuxième colonne (22b), et **en ce que**
le au moins un câble d'amarrage relié à la troisième colonne (22c) comprend un câble d'amarrage empêchant une rotation (34h) s'étendant vers une région (β) sur le côté de la première colonne, la région étant définie par une bissectrice (a) à une intersection des deux coques inférieures (24a, 24b) et par une ligne droite (c) perpendiculaire à la bissectrice et qui traverse un centre de la troisième colonne (22c).

2. Dispositif générateur à turbine éolienne de type flottant selon la revendication 1, dans lequel le câble d'amarrage empêchant une rotation (34c) relié à la deuxième colonne (22b) s'étend suivant une direction perpendiculaire à une direction axiale de la première coque inférieure (24a) reliant les première et deuxième colonnes, et
dans lequel le câble d'amarrage empêchant une rotation (34h) relié à la troisième colonne (22c) s'étend suivant une direction perpendiculaire à une direction axiale de la seconde coque inférieure (24b) reliant les première et troisième colonnes.

3. Dispositif générateur à turbine éolienne de type flottant selon la revendication 1, dans lequel une pluralité des câbles d'amarrage (34) est reliée à chacune des deuxième et troisième colonnes.

4. Dispositif générateur à turbine éolienne de type flottant selon la revendication 1, dans lequel chacune des première, deuxième et troisième colonnes (22a, 22b, 22c) ont une partie de guidage (80) agencée sur une face latérale de celles-ci, la partie de guidage étant configurée pour guider le câble d'amarrage afin qu'il soit relié suivant une direction verticale le long de la face latérale de chacune des colonnes.

5. Dispositif générateur à turbine éolienne de type flottant selon la revendication 4, dans lequel chacune des première, deuxième et troisième colonnes (22a, 22b, 22c) comprennent une butée (90) agencée au-dessus de la partie de guidage (80) sur la face latérale de celles-ci, la butée étant configurée pour empêcher le câble d'amarrage guidé par la partie de guidage de tomber vers le bas, et
dans lequel la butée (90) comprend :
un élément faisant saillie (92) qui fait saillie à partir de la face latérale de chacune des colonnes et ayant un trou traversant (94) à l'intérieur duquel le câble d'amarrage peut être inséré et dont la taille de l'ouverture augmente vers le haut ; et
un élément de cale (96a, 96b) pouvant être inséré à l'intérieur du trou traversant (94) à partir du dessus dans un état où le câble d'amarrage est inséré à travers le trou traversant.

6. Dispositif générateur à turbine éolienne de type flottant selon la revendication 4, dans lequel la partie de guidage (80) comprend un guide-câble (80a) agencé de sorte que le câble d'amarrage soit maintenu entre le guide-câble et la face latérale de la colonne.

7. Dispositif générateur à turbine éolienne de type flottant selon la revendication 6, dans lequel le câble d'amarrage (34) a une forme de chaîne constituée d'une pluralité d'éléments reliés en forme d'anneau (35), et
dans lequel le guide-câble (80a) comprend :
une paire d'éléments de support (82) faisant saillie à partir de la face latérale de chacune des colonnes ; et
un corps rotatif (84) qui est supporté de manière rotative entre la paire d'éléments de support et qui comprend une pluralité de saillies (86) avec un pas qui correspond à une longueur de chacun des éléments en forme d'anneau, les saillies étant agencées sur une circonférence extérieure du corps rotatif le long d'une direction de rotation, et
dans lequel chacune des saillies (86) comprend une fente (86a) dans laquelle au moins un des éléments en forme d'anneau (35) peut être inséré, guidant ainsi le câble d'amarrage suivant la direction verticale le long de la face latérale de chacune des colonnes.

8. Dispositif générateur à turbine éolienne de type flottant selon la revendication 4, dans lequel un élément de pression (66) est agencé sur une face supérieure de chacune des première, deuxième et troisième colonnes (22a, 22b, 22c), l'élément de pression étant configuré pour forcer le câble d'amarrage (34) contre la face supérieure de façon à fixer le câble d'amarrage sur le dessus de la face supérieure.

9. Dispositif générateur à turbine éolienne de type flottant selon la revendication 8, dans lequel le corps flottant (20) est équipé d'un espace de logement à l'intérieur de chacune des première, deuxième et troisième colonnes (22a, 22b, 22c), l'espace de logement (68) ayant une ouverture sur la face supérieure de chacune desdites colonnes et étant configuré pour recevoir le câble d'amarrage (34).

10. Dispositif générateur à turbine éolienne de type flottant selon la revendication 1, dans lequel le corps flottant (20) comprend un réservoir d'eau (26) à l'intérieur du corps flottant, l'espace du réservoir d'eau étant configuré pour pouvoir ajuster une quantité stockée d'eau de ballast.

11. Dispositif générateur à turbine éolienne de type flottant selon la revendication 10, dans lequel l'espace du réservoir d'eau fourni à l'intérieur du corps flottant est divisé en une pluralité de chambres secondaires (26) suivant une direction longitudinale de chacune des coques inférieures, chacune des chambres secondaires étant configurée pour pouvoir recevoir et évacuer de l'eau de ballast.

12. Dispositif générateur à turbine éolienne de type flottant selon la revendication 4, dans lequel une corde (67) est reliée à une extrémité du câble d'amarrage (34) sur un côté relié à la colonne.

13. Procédé d'amarrage pour un dispositif générateur à turbine éolienne de type flottant comprenant un générateur à turbine éolienne (10), un corps flottant (20) sur lequel est installé le générateur à turbine éolienne comprenant une première colonne (22a) reliée à une deuxième et troisième colonnes (22b, 22c) par l'intermédiaire de deux coques inférieures (24a, 24b) et une pluralité de câbles d'amarrage (34) chacun d'entre eux reliant le corps flottant et une ancre (32) fixée sur un fond d'une eau, le procédé comprenant les étapes consistant à :
agencer le corps flottant (20) de sorte que la première colonne (22a) soit positionnée sur un côté face au vent suivant une direction principale du vent et la deuxième et troisième colonnes (22b, 22c) soient positionnées sous le vent par rapport à la première colonne suivant la direction principale du vent ;
relier au moins deux câbles de la pluralité de câbles d'amarrage (34a, 34b) à la première colonne (22a) suivant une chaînette ;
relier au moins un câble de la pluralité des câbles d'amarrage (34c, 34d, 34e) à la deuxième colonne (22b) suivant la chaînette ;
relier au moins un câble de la pluralité des câbles d'amarrage (34f, 34g, 34h) à la troisième colonne (22c) suivant la chaînette ; et
agencer les câbles d'amarrage (34) radialement de façon à ce qu'ils ne se croisent pas l'un avec l'autre, dans lequel
le au moins un câble d'amarrage relié à la deuxième colonne (22b) comprend un câble d'amarrage empêchant une rotation (34c) relié de façon à s'étendre vers une région (α) sur le côté de la première colonne, la région étant définie par une bissectrice (a) à une intersection des deux coques inférieures (24a, 24b) et par une ligne droite (b) perpendiculaire à la bissectrice et qui traverse un centre de la deuxième colonne (22b), et dans lequel
le au moins un câble d'amarrage relié à la troisième colonne (22c) comprend un câble d'amarrage empêchant une rotation (34h) s'étendant vers une région (β) sur le côté de la première colonne, la région étant définie par une bissectrice (a) à une intersection des deux coques inférieures (24a, 24b) et par une ligne droite (c) perpendiculaire à la bissectrice et qui traverse un centre de la troisième colonne (22c).

14. Procédé d'amarrage pour un dispositif générateur à turbine éolienne de type flottant selon la revendication 13,
dans lequel le câble d'amarrage empêchant une rotation (34c) relié à la deuxième colonne (22b) est relié de façon à s'étendre suivant une direction perpendiculaire à une direction axiale de la première coque inférieure (24a) reliant les pre dans lequel mière et deuxième colonnes, et
dans lequel le câble d'amarrage empêchant une rotation (34h) relié à la troisième colonne (22c) est relié de façon à s'étendre suivant une direction perpendiculaire à une direction axiale de la seconde coque inférieure (24b) reliant les première et troisième colonnes.

15. Procédé d'amarrage pour un dispositif générateur à turbine éolienne de type flottant selon la revendication 14,
dans lequel une pluralité des câbles d'amarrage (34) est reliée à chacune des deuxième et troisième colonnes (22b, 22c).

16. Procédé d'amarrage pour un dispositif générateur à turbine éolienne de type flottant selon la revendication 13, comprenant en outre, avant de relier les câbles d'amarrage (34) au corps flottant (20), les étapes consistant à :
immerger chacune des ancres (32) reliées à chacun des câbles d'amarrage à une position prédéterminée au fond de l'eau depuis un navire indépendant du corps flottant ; et
remorquer chacun des câbles d'amarrage de façon à fixer chacune des ancres immergées au fond de l'eau.

17. Procédé d'amarrage pour un dispositif générateur à turbine éolienne de type flottant selon la revendication 16, dans lequel, à l'étape de remorquage,
les câbles d'amarrage (34) sont combinés les uns aux autres et les câbles d'amarrage combinés sont remorqués collectivement pour fixer les ancres immergées (32) collectivement au fond de l'eau.

18. Procédé d'amarrage pour un dispositif générateur à turbine éolienne de type flottant selon la revendication 16, dans lequel, à l'étape de remorquage,
une puissance de résistance de chacun des câbles d'amarrage (34) est mesurée sur la base d'un couple fourni en sortie d'une alimentation électrique pour remorquer les câbles d'amarrage ou une tension de chacun des câbles d'amarrage en cours de remorquage.
